# EUROPÄISCHE PATENTSCHRIFT

(11) **EP 1 080 681 B1**
(45) Veröffentlichungstag und Bekanntmachung des Hinweises auf die Patenterteilung: **01.03.2006**
(21) Anmeldenummer: 00117081.0
(22) Anmeldetag: 09.08.2000
(51) Int. Cl.: A47L 15/42

(54) **Verfahren zur Bereitstellung von Weichwasser zum Geschirrspülen bei einer programmgesteuerten Geschirrspülmaschine**
Method for preparing softened water for washing dishes in a program controlled dishwasher
Procédé de préparation d'eau adoucie pour lave-vaisselles à programmation

(30) Priorität: 25.08.1999 DE 19940162
(43) Veröffentlichungstag der Anmeldung: 07.03.2001
(73) Patentinhaber: Miele & Cie. KG, 33332 Gütersloh (DE)
(72) Erfinder: Ernst, Michael, 33609 Bielefeld (DE); Hettenhausen, Ulrich, 33739 Bielefeld (DE)

(56) Entgegenhaltungen:
- EP-A- 0 405 086
- DE-A- 4 422 128
- DE-A- 19 512 011
- DE-A- 19 749 636
- GB-A- 2 022 872

## Beschreibung

Die Erfindung betrifft ein Verfahren zur Bereitstellung von Weichwasser zum Geschirrspülen bei einer an ein Frischwassernetz angeschlossenen programmgesteuerten Geschirrspülmaschine, die mit einer Wasserenthärtungseinrichtung und mindestens einem Wasserhärtesensor im ventilgesteuerten Gerätewasserlauf ausgestattet ist und separat anwählbare Spülprogramme mit zugeordneten Spülabschnitten, wie Vorspülen, Reinigen, Zwischenspülen und Klarspülen umfaßt, in denen durch Wasserverschnitt aus nicht enthärtetem Frischwasser und Weichwasser des Enthärters auf einen bestimmten Härtegrad eingestellte Spülflüssigkeit zum Geschirrspülen in den Spülbehälter eingelassen wird.

Beim maschinellen Geschirrspülen spielt die Wasserhärte eine besondere Rolle. Wird hartes, karbonhaltiges Wasser eingesetzt, bleiben Kalkschleier auf dem Geschirr, im Spülraum und auf dem Heizkörper zurück. Damit das Spülergebnis durch die Wasserhärte nicht negativ beeinflußt wird, werden Geschirrspülmaschinen mit Enthärtungseinrichtungen ausgestattet. Solche Einrichtungen werden am Aufstellort der Spülmaschine nach Anweisung des Geräteherstellers auf eine Wasserhärte (Rohwasserhärte) eingestellt, welche vom zuständigen Wasserwerk zu erfahren ist. Die in Geschirrspülmaschinen eingesetzten Enthärtungseinrichtungen arbeiten in aller Regel nach dem lonenaustausch-Verfahren und sind in Form sog. Monoblockenthärter jeweils mit integriertem Salzbehälter zum regenerieren des Enthärterharzes ausgebildet. Dem Salzbehälter ist eine sog. "Wassertasche" zur Bevorratung abrufbarer Rohwassermengen zur Regeneriersole-Aufbereitung vorgeschaltet. Die Kapazität des Enthärters ist allgemein für eine Frisch- oder Rohwasserhärte bis 70°d (deutsche Härte) ausgelegt. Das zum Geschirrspülen dem Enthärter entnehmbare Weichwasser weist bei regeneriertem Enthärter nur noch geringe Härtegrade (z. B. 0,4°d) auf.

Für das maschinelle Geschirrspülen kann in den Spülabschnitten Reinigen oder Klarspülen, bzw. in den Spülprogrammen oder Spülabschnitten, in denen das Reinigen des Geschirrs mit erwärmter Spülflüssigkeit im Vordergrund steht, ein niedriger Härtegrad des Weichwassers vorteilhaft sein. Dies gilt insbesondere für Standardspülprogramme, wie Normal, Intensiv oder Universal, die sind vorrangig zum Spülen der Teller, Tassen, Bestecke, Töpfe (Standardgeschirr) eingerichtet sind. Abweichend hiervon ist es bei den Zusatz- oder Sonderspülprogrammen (z. B. FEIN oder GLASSPÜLEN) für empfindliches Glasgeschirr wünschenswert, mit einer höheren Wasserhärte der Spülflüssigkeiten zu arbeiten, um einer Glaskorrosion wirksam vorzubeugen. Hier sollte die Wasserhärte der Spülflüssigkeit größer als 1°d, aber unter Berücksichtigung der heute für eine gute Reinigerleistung vorgesehenen ökologischen Spülmittel jedoch nicht wesentlich höher als 4°d sein. Weiterhin kann es beim Geschirrspülen aus ökölogischer Sicht sehr zweckmäßig sein, wenn zur Herabsetzung des Salzverbrauchs zum Regenerieren des Enthärters die sog. Kaltspülgänge, wie das Vorspülen oder das Zwischenspülen mit nur gering enthärteter Spülflüssigkeit durchgeführt werden.

Es ist bekannt, beim maschinellen Geschirrspülen durch Wasserverschnitt aus dem Rohwasser (Frischwasser) und Weichwasser des Enthärters den Härtegrad der Spülflüssigkeit auf einen bestimmten Wert festzulegen. Hierdurch ist zwar eine bestimmte Wasserhärte zum Geschirrspülen einstellbar, jedoch gilt die durch die Mischung erzielte Spülwasserhärte dann als konstante Härtegrundeinstellung für alle nachfolgenden folgenden Spülprogramme sowie auch für die in den Spülprogrammen beinhalteten wasserführenden Spülabschnitte. Dies ist nachteilig für Spülprogramme, die ausschließlich mit Spülwasser höherer Härte optimal spülen, oder umgekehrt.

Ausgehend von einem Verfahren der eingangs genannten Art liegt der Erfindung die Aufgabe zugrunde, den Spülwasserhärtegrad zur Optimierung der Geschirreinigung sowie auch zur Senkung des Salzverbrauchs den wählbaren verschiedenen Spülprogrammen und deren zugeordneten Spülabschnitten individuell anzupassen.

Erfindungsgemäß wird diese Aufgabe durch die im Patentanspruch 1 angegebenen Verfahrensschritte gelöst.

Vorteilhafte Weiterbildungen des Verfahrens ergeben sich aus den nachfolgenden Unteransprüchen.

Durch die spülprogrammabhängige Einstellung der Wasserhärte kann jedem angewählten Programm, sei es ein Standard-Spülprogramm oder ein Sonder-Spülprogramm (bzw. Zusatz-Programm) immer der optimale Wasserhärtegrad zugeordnet werden. So kann beispielsweise in einem herkömmlichen und insbesondere auf die Geschirreinigung abgestellten Spülprogramm (bspw. "Universal 65°C") die Wasserhärte generell niedriger eingestellt werden als in dem Zusatz-Programm "FEIN oder GLASSPÜLEN", welches zur Vermeidung von Glaskorrosionen eine höhere Wasserhärte fordert. Es ist durch die Erfindung vorteilhaft möglich, unabhängig von der Rohwasserhärte des zugeführten Frischwassers mit einer gewollten Wasserhärte der Spülflüssigkeit in den verschiedenen Spülprogrammen zu arbeiten. Der besondere Vorteil ist aber auch in der programmschrittabhängigen Wasserhärteeinstellung zu sehen, bei der innerhalb eines Spülprogramms in den einzelnen Wassereinlaufschritten die Wasserhärte zusätzlich noch variiert wird. Die Erfindung ermöglicht vorteilhaft einfach ein geschirrschonendes und auch salzsparendes Geschirrspülen. Die für jedes Spülprogramm voreingestellten Härtegrade für die einzusetzende Spülflüssigkeit werden bei der Spül-Programmanwahl aus dem Speicher der Geräteelektronik ausgelesen und veranlassen die im Wasserlauf angeordneten Ventile zum entsprechenden Spülwasserverschnitt. Eine entsprechende vorprogrammierte Einstellung gilt für die programmschrittabhängige Wasserhärteregulierung. So ist es nun auch vorteilhaft möglich, die Wasserhärte beim Aufheizen der Spülflüssigkeit im Spülabschnitt Reinigen und/oder Klarspülen im Bedarfsfall generell niedriger einzustellen als beim Kaltspülen im Vorspül- und/oder Zwischenspülgang. Dadurch können Kalziumausfälle im Spülwasser gesenkt sowie die Regeneriersalzmengen herabgesetzt werden.

Die Erfindung geht aus von einem an sich bekannten Verfahren zur Bereitstellung von Weichwasser zum Geschirrspülen durch Wasserverschnitt bei einer an ein Frischwassemetz angeschlossenen programmgesteuerten Geschirrspülmaschine, wie es beispielsweise aus der DE 197 49 636 A1 bekannt ist.

Bei der bekannten Geschirrspülmaschine ist eine Wasserenthärtungseinrichtung im Frisch- oder Rohwasserlauf des Gerätes vorgesehen. Zur Kontrolle, Korrektur und Einstellung der Spülwasserhärte wird mindestens ein Wasserhärtesensor im ventilgesteuerten Gerätewasserlauf vorgesehen. Die Wasserhärte läßt sich beispielsweise durch Messung des Leitwertes des Rohwassers bzw. der eingesetzten enthärteten Spülflüssigkeit in an sich bekannter Weise bestimmen. Dabei besteht die Möglichkeit, Härtesensoren vor und/oder hinter der Enthärtungseinrichtung im Wasserlauf anzuordnen, so daß konkrete Aussagen über die Rohwasserhärte des zufließenden Frischwassers und die Härte des Weichwassers aus dem Enthärter gemacht und entsprechende Zumischverhältnisse für das Spülwasser eingesteuert werden können. Die Enthärtungseinrichtung, die beispielsweise nach dem Ionenaustausch-Verfahren arbeitet und nach Art eines Monoblockenthärters mit integriertem Salzbehälter innerhalb der Spülmaschine ausgebildet ist, liefert Weichwasser ab ca. 0,3°d. Jeweils in den wasserführenden Programmabschnitten eines Spülprogramms wird ventilgesteuert Rohwasser durch den Enthärter geschickt, welches als enthärtete Spülflüssigkeit den Enthärter verläßt und in den Spülbehälter des Gerätes eingespeist wird. Eine separat im Bypass zum Enthärter in den Weichwasserausgang des Enthärters mündende Leitung für Roh- oder Frischwasser (nicht enthärtet) ist mit einer integrierten Ventileinheit ausgestattet. Ober diese Leitung kann ein Wasserverschnitt mit dem Weichwasser aus dem Enthärter realisiert werden. Dies wird durch den Rechner der programmgesteuerten Geschirrspülmaschine in Abhängigkeit von der jeweils herrschenden Eingangswasserhärte, der Weichwasserhärte am Ausgang des Enthärters sowie der Vorgabe von im Rechner gespeicherter Tabellenwerte für Wasserhärten der einzelnen Spülprogramme und Spülabschnitte erreicht. Eine bekannte Wassertasche für Regenerierflüssigkeit ist im Zulauf zum Enthärter unter der Zwischenschaltung des Salzbehälters angeordnet.

Die programmgesteuerte Geschirrspülmaschine besitzt separat anwählbare Spülprogramme mit den Spülabschnitten Vorspülen, Reinigen, Zwischenspülen und Klarspülen, wobei ggf. die Abschnitte Vorspülen und/oder Zwischenspülen separat aus- oder auch mehrfach einblendbar sind.

Die vom Bediener separat über das Bedienfeld des Gerätes anwählbaren Spülprogramme beinhalten einerseits STANDARD - Programme, wie UNIVERSAL 55°C bzw. 65°C, INTENSIV 75°C usw., die von den Spülwassertemperaturen sowie der Anzahl ihrer zugeordneten wasserführenden Spülabschnitte im wesentlichen auf das "Reinigen" von Standardgeschirr ausgelegt sind. Daneben sind sog. SONDER - oder ZUSATZ - Spülprogramme vorgesehen, z. B. FEIN 45°C *l* 55°C, KURZ 45°C / 55°C usw., die aufgrund niedrig einstellbarer Spülwassertemperaturwerte vorteilhaft zum Gläserspülen einsetzbar sind. Weiterhin sind sog. Kalt-Spülprogramme vorgesehen, bei denen in den zugeordneten Spülabschnitten die Spülflüssigkeit nicht erwärmt wird. Solche Spülprogramme sind beispielsweise das nur den Spülabschnitt Vorspülen beinhaltende gleichnamige Programm VORSPÜLEN sowie das Programm ELECTRO SPAR, welches zwei Vorspülgänge, den üblichen Reinigungs-, Zwischenspül- sowie den Klarspülgang abarbeitet. Die Spülprogramme werden in aller Regel durch den Programmabschnitt TROCKNEN (nicht näher ausgeführt) abgeschlossen. In diesem abschließenden nicht wasserführenden Programmschritt kann auch das Regenerieren des Enthärters fallweise erfolgen. Hierfür ist der vorerwähnten Enthärtungseinrichtung bzw. dem Salzbehälter der Einrichtung eine sog. Wassertasche in an sich bekannter Weise vorgeschaltet, welche zur Bevorratung abrufbarer Regenerierwassermengen zur Aufbereitung der Salzsole für den Enthärter dient.

Die nachstehende Tabelle stellt zur Erläuterung des erfindungsgemäßen Verfahrens die vorerwähnten verschiedenen Spülprogramme (Standard-Programme und Zusatz-Programme) mit den zugeordneten Spülabschnitten Vorspülen, Reinigen usw. dar.

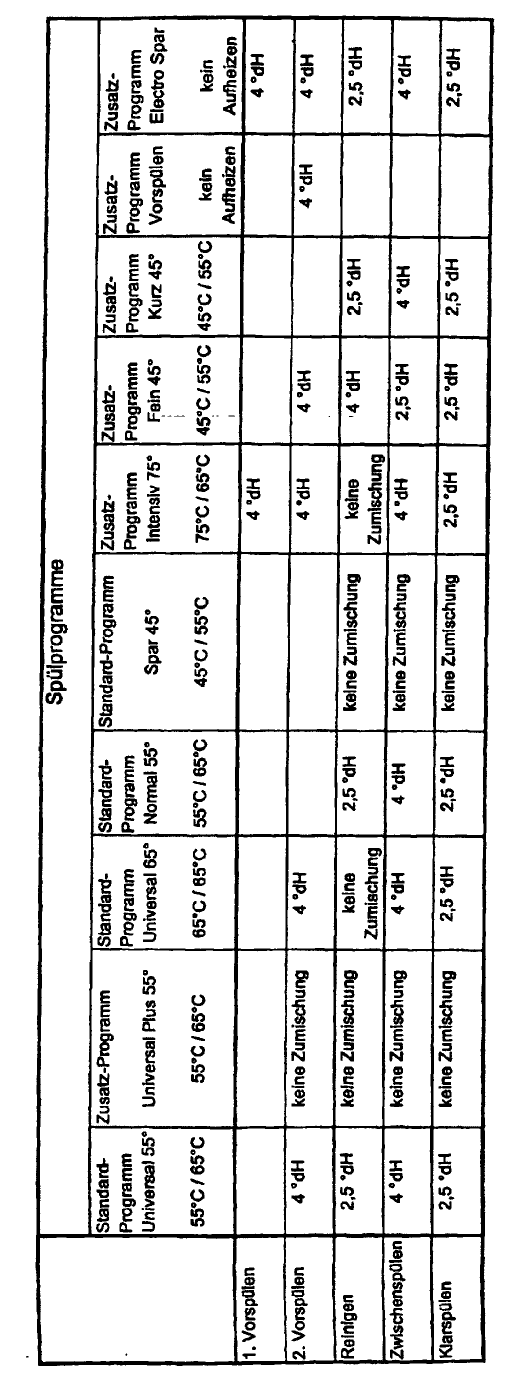

Die vollautomatische Steuerung eines jeweils angewählten Spülprogramms übernimmt die geräteeigene Elektronik (Mikroprozessor) in Abhängigkeit von der gewünschten Wassertemperatur, dem Verschmutzungsgrad des Spülwassers, der Spülwassermenge, der Rohwasserhärte sowie der "Wunschhärte" (gemäß Tabelle) im Spülraum und weiteren Parametern oder Zustandsgrößen.

Zur Optimierung des Spülergebnisses ist erfindungsgemäß vorgesehen, die anwählbaren Spülprogramme auf unterschiedliche Härtegrade zum Geschirrspülen voreinzustellen d. h., diese Spülprogramme mit vorgegebenen Wasserhärten abzuarbeiten. Auch ist vorgesehen, die einem angewählten Spülprogramm zugeordneten Spülabschnitte auf unterschiedliche Härtegrade voreinzustellen. Die Tabelle gibt auch den jeweils einzustellenden Härtegrad in den Programmen für die einzusetzenden Spülflüssigkeiten an.

Durch die spülprogrammabhängige Einstellung der Wasserhärte kann jedem angewählten Programm, sei es ein Standard-Spülprogramm oder ein Sonder-Spülprogramm (bzw. Zusatz-Programm) immer der optimale Wasserhärtegrad zugeordnet werden. So kann beispielsweise in einem herkömmlichen und insbesondere auf die Geschirreinigung abgestellten Spülprogramm (bspw. "Universal 65") die Wasserhärte generell niedriger eingestellt werden, als In dem Zusatz-Programm "FEIN"45°C, welches zur Vermeidung von Glaskorrosionen eine höhere Wasserhärte im Reinigungsgang fordert. Es ist also vorteilhaft möglich, unabhängig von der Rohwasserhärte des zugeführten Frischwassers mit einer gewollten Wasserhärte der Spülflüssigkeit in den verschiedenen Spülprogrammen, aber auch in den Spülabschnitten zu arbeiten. Die programmschrittabhängige Wasserhärteeinstellung bietet den Vorteil, daß dem geladenen Spülgut entsprechend eine noch feinere Wasserhärteanpassung möglich ist. Dadurch kann das Geschirrspülen noch effektiver und geschirrschonender erfolgen. Zudem besteht die weitere Möglichkeit, individuell oder dem Kundenwunsch entsprechend Standardpnogramme oder auch andere Sonderprogramme zumindest hinsichtlich der Wasserhärteeinstellung so zu beeinflussen, daß diese auch für empfindliches Spülgut benutzt werden können. Es könnte beispielsweise einem oder mehreren dieser Programmen eine separate Sonderfunktion bspw. die Funktion "Glasschonung" zugeordnet werden, welche den Wasserverschnitt in dem Standardprogramm so einstellt, daß das Spülen empfindlicher Gäser auch mit diesem Programm problemlos möglich ist. Die Sonderfunktion kann separat manuell über das Bedienfeld als Zusatzfunktion oder Programm zuschaltbar sein. Vorzugsweise könnte bei Abruf solcher Sonderfunktionen neben der Härtewahl per Programm auch auf die Temperatur der eingesetzten Spülflüssigkeit Einfluß genommen werden. Für empfindliche Gläser sollten bevorzugt nur 55°C Programme oder Programme mit niedrigeren Temperaturen gewählt werden. Eine Zumischung von Rohwasser könnte dann beispielsweise auch in dem Standardprogramm SPAR 45°C oder in dem Programm UNIVERSAL PLUS 55°C erfolgen.

Die Erfindung ermöglicht vorteilhaft einfach ein geschirrschonendes und auch salzsparendes Geschirrspülen. So ist es möglich, mit beispielsweise 2,5°d in den Warmspülgängen Reinigen und Klarspülen empfindliche Gläser problemlos zu spülen. Hingegen für Standardgeschirr das Spülen mit 4°d im Spülabschnitt Vorspülen, mit sehr niedrigen Härtegraden (ohne Wasserverschnitt) beim Programmabschnitt Reinigen und wiederum mit 2,5°d oder niedriger im Klarspülen realisiert werden. Die für jedes Spülprogramm voreingestellten Härtegrade für die einzusetzende Spülflüssigkeit werden bei der Spül-Programmanwahl aus dem Speicher der Geräteelektronik ausgelesen und veranlassen die im Wasserlauf angeordneten Ventile zum entsprechenden Spülwasserverschnitt. Eine entsprechende vorprogrammierte Einstellung gilt für die programmschrittabhängige Wasserhärteregulierung. So ist es nun auch vorteilhaft möglich, die Wasserhärte beim Aufheizen der Spülflüssigkeit im Spülabschnitt Reinigen und/oder Klarspülen im Bedarfsfall generell niedriger einzustellen als beim Kaltspülen im Vorspülen und/oder Zwischenspülen. Dadurch können Kalziumausfälle im Spülwasser gesenkt sowie die Regeneriersalzmengen herabgesetzt werden.

Zur Wasserhärteeinstellung der in den Spülbehälter des Gerätes einlaufenden Spülflüssigkeit wird die sensierte Wasserhärte des Weichwassers aus dem Enthärter und die gespeicherte oder sensierte Rohwasserhärte des Frischwassers herangezogen.

Die unterschiedlichen Wasserhärten für die Spülflüssigkeiten sind in einem elektronischen Speicher der Spülmaschine (bezogen auf vorgegebene Spülwassermengen) abrufbar und ggf. auch änderbar hinterlegt. Die gespeicherten Härtetabellen beinhalten die bestimmten Mischungsverhältnisse zwischen den Rohwasserhärten des Frischwassers und den Wasserhärten aus dem Enthärter. Abhängig vom jeweils angewählten Härtegrad der Spülflüssigkeit werden die Ventile im Frisch- und/oder Weichwasserlauf des Gerätes gesteuert.

In der Praxis ist es so, daß der Härtegrad der in den Spülbehälter des Gerätes in einem wasserführenden Spülabschnitt einfließenden Spülflüssigkeit z. B. durch die Leitwertmessung der Spülflüssigkeit sensiert und mit dem voreingestellten Weichwasserhärtegrad verglichen wird. Abhängig vom Vergleichsergebnis wird dann der Wasserverschnitt gesteuert. Der Wasserhärtegrad der jeweils zum Geschirrspülen in den Spülbehälter einzubringenden Spülflüssigkeitsmenge ist gemäß der Tabelle zwischen 0,4°d und 4°d abrufbar, wobei Spülprogramme ohne Wasserverschnitt (keine Zumischung) nur Weichwasser aus dem Enthärter nutzen, welches zwischen dem Härtegrad 0,4°d und 2°d variieren kann.

Anfangs wird in den Rechner der programmgesteuerten Geschirspülmaschine die örtliche Rohwasserhärte des Frischwassers eingegeben. Dies kann durch einmalige manuelle Eingabe beim Aufstellen des Gerätes oder durch jeweiliges Messen durch die Maschine selbst vor jedem Spülgang erfolgen. Im laufenden Spülprogramm wird die beim Spülwassereinlauf in den Spülbehälter sensierte Weichwasserhärte des Enthärters dem Rechner der Geräteelektronik mitgeteilt. Der Rechner gibt für das laufende Spülprogramm bzw. für den jeweiligen Spülabschnitt den abgespeicherten Spülwasserhärtewert (sh. Tabelle) vor und ermittelt aus der Rohwasserhärte des Frischwassers und der Weichwasserhärte am Enthärterausgang das Verhältnis von einlaufendem Weichwasser aus dem Harzbett und nicht enthärtetem einlaufendem Rohwasser. Hieraus wird ein Einschaltverhältnis der im Wasserlauf angeordneten Ventile festgelegt bzw. berechnet, welches als Maßgabe für das Zumischen von hartem Frischwasser zur weichen Spülflüssigkeit dient, bzw. die Öffnungszeiten der Ventile bestimmt.

Die Wasserhärte der Spülflüssigkeit in den Spülabschnitten Vorspülen, Reinigen, Zwischenspülen und/oder Klarspülen kann auch vom Verschmutzungsgrad, beispielsweise von der Trübung der umgewälzten Spülflüssigkeit abhängig gesteuert werden. Im Falle einer sensierten hohen Verschmutzung kann die Wasserhärte in Richtung niedrigerer Härte herabgesenkt werden, um hierdurch eine bessere Reinigungsleistung des Geschirrs zu erzielen.

Es ist auch möglich, die Wasserhärte der Spülflüssigkeit in Abhängigkeit von der Rohwasserhärte zu korrigieren bzw. zu ändern.

Sollte sich bei Rohwasserhärten des zufließenden Frischwassers (ggf. schon bei 30°d) die Weichwasserhärte am Enthärterausgang von 0,4°d gegen 2°d und weiter nach oben hin ändem, so könnte dies vom Rechner entsprechend berücksichtigt und entsprechende Korrekturwerte in die Tabelle eingerechnet werden. Hingegen stellen Rohwasserhärten niedriger als 2°d in der Regel Ausnahmen dar und bleiben unberücksichtigt. Der Zeitpunkt zum Regenerieren des Enthärters erfolgt abhängig vom Wassermengen- und/oder Sensorüberwachten Erschöpfungsgrad des Enthärterharzes.

## Patentansprüche

1. Verfahren zur Bereitstellung von Weichwasser zum Geschirrspülen bei einer an ein Frischwassemetz angeschlossenen programmgesteuerten Geschirrspülmaschine, die mit einer Wasserenthärtungseinrichtung und mindestens einem Wasserhärtesensor im ventilgesteuerten Gerätewasserlauf ausgestattet ist und separat anwählbare Spülprogramme mit zugeordneten Spülabschnitten, wie Vorspülen, Reinigen, Zwischenspülen und Klarspülen umfaßt, in denen durch Wasserverschnitt aus nicht enthärtetem Frischwasser und Weichwasser des Enthärters auf einen bestimmten Härtegrad eingestellte Spülflüssigkeit zum Geschirrspülen in den Spülbehälter eingelassen wird,
**dadurch gekennzeichnet,**
**daß** die Spülprogramme auf unterschiedliche Härtegrade zum Geschirrspülen voreinstellbar sind.

2. Verfahren nach Anspruch 1,
**dadurch gekennzeichnet,**
**daß** die einem anwählbaren Spülprogramm zugeordneten Spülabschnitte auf unterschiedliche Härtegrade voreinstellbar sind.

3. Verfahren nach Anspruch 1 oder 2,
**dadurch gekennzeichnet,**
**daß** unterschiedliche Wasserhärten für die Spülflüssigkeiten in einem elektronischen Speicher der Spülmaschine (bezogen auf vorgegebene Spülwassermengen) abrufbar hinterlegt sind, die jeweils bestimmte Mischungsverhältnisse zwischen den Rohwasserhärten des Frischwassers und den Wasserhärten aus dem Enthärter beinhalten, und daß abhängig vom jeweils angewählten Härtegrad der Spülflüssigkeit die Ventile im Frisch- und/oder Weichwasserlauf des Gerätes gesteuert sind.

4. Verfahren nach einem oder mehreren der Ansprüche 1 bis 3,
**dadurch gekennzeichnet,**
**daß** die Wasserhärte der Spülflüssigkeit in Abhängigkeit von der Rohwasserhärte korrigiert/verändert wird.

5. Verfahren nach einem oder mehreren der Ansprüche 1 bis 4,
**dadurch gekennzeichnet,**
**daß** der Härtegrad der in den Spülbehälter des Gerätes in einem wasserführenden Spülabschnitt einfließenden Spülflüssigkeit sensiert und mit dem voreingestellten Weichwasserhärtegrad verglichen wird, und daß abhängig vom Vergleichsergebnis der Wasserverschnitt gesteuert ist.

6. Verfahren nach einem oder mehreren der Ansprüche 1 bis 5,
**dadurch gekennzeichnet,**
**daß** der Wasserhärtegrad der jeweils zum Geschirrspülen in den Spülbehälter einzubringenden Spülflüssigkeitsmenge vorzugsweise zwischen 0,4°d und 4°d, oder auch darüber eingestellt wird.

7. Verfahren nach einem oder mehreren der Ansprüche 1 bis 6,
**dadurch gekennzeichnet,**
**daß** die Wasserhärte der Spülflüssigkeit in den Spülabschnitten Vorspülen, Reinigen, Zwischenspülen und/oder Klarspülen vom Verschmutzungsgrad, insbesondere von der Trübung der umgewälzten Spülflüssigkeit abhängig gesteuert ist.

8. Verfahren nach einem oder mehreren der Ansprüche 1 bis 7,
**dadurch gekennzeichnet,**
**daß** bei mindestens einem der Standard- und/oder Zusatzprogramme eine Sonderfunktion separat manuell oder per Programm zuschaltbar ist, welche den Programmlauf zumindest hinsichtlich der Spülwasserhärte und/oder Spülwassertemperatur beeinflußt.

9. Verfahren nach Anspruch 8,
**dadurch gekennzeichnet,**
**daß** die Sonderfunktion das Spülen empfindlicher Gläser unterstützt.

## Claims

1. Method for making available soft water for washing dishes in a program-controlled dishwasher connected to the fresh water network, said dishwasher being provided with a water softening device and at least one water hardness sensor in the valve-controlled water course of the device and comprising separately selectable washing programs with associated washing steps, such as pre-wash, wash, intermediate wash and rinse, in which, by means of blending non-softened fresh water and soft water from the water softener, washing fluid set to a certain degree of hardness is introduced into the washing chamber for washing the dishes, **characterised in that** the washing programs can be preset to different degrees of hardness for washing the dishes.

2. Method according to claim 1, **characterised in that** the washing steps associated with a selectable washing program can be preset to different degrees of hardness.

3. Method according to claim 1 or 2, **characterised in that** different degrees of water hardness for the washing fluids are stored in an electronic memory of the washing machine so as to be called up (with reference to preset amounts of water), said different degrees of water hardness comprising in each case certain mixture ratios between the degrees of hardness of untreated fresh water and the degrees of hardness from the water softener, and **in that** the valves in the fresh water course and/or soft water course of the appliance are controlled depending on the selected degree of hardness of the washing fluid.

4. Method according to one or more of claims 1 to 3, **characterised in that** the degree of water hardness of the washing fluid is influenced/modified in dependence on the hardness of the untreated water.

5. Method according to one or more of claims 1 to 4, **characterised in that** the degree of hardness of the washing fluid flowing into the washing container of the appliance is sensed in a water-conducting washing step and is compared to the preset degree of hardness of the soft water, and **in that** the blending of the water is controlled depending on the result of the comparison.

6. Method according to one or more of claims 1 to 5, **characterised in that** the degree of water hardness of the amount of washing fluid to be introduced in each case into the washing container for washing the dishes is preferably set between 0.4°d and 4°d, or even higher.

7. Method according to one or more of claims 1 to 6, **characterised in that** the water hardness of the washing fluid in the washing steps pre-wash, wash, intermediate wash and/or rinse is controlled dependent on the degree of contamination, more especially on the turbidity of the circulated washing fluid.

8. Method according to one or more of claims 1 to 7, **characterised in that** in the case of at least one of the standard and/or additional programs a special function can be switched to separately in a manual manner or per program, which special function influences the course of the program at least with regard to the hardness of the washing water and/or the temperature of the washing water.

9. Method according to claim 8, **characterised in that** the special function supports the washing of sensitive glasses.

## Revendications

1. Procédé pour produire de l'eau adoucie pour laver la vaisselle dans un lave-vaisselle à programmes raccordé au réseau de distribution d'eau douce qui est équipé d'un adoucisseur d'eau et d'au moins un capteur de la dureté de l'eau dans le circuit d'eau de l'appareil commandé par une vanne, et qui comprend des programmes de lavage pouvant être sélectionnés individuellement avec des étapes associées telles que prélavage, lavage, rinçage intermédiaire et rinçage final, au cours desquels en coupant l'eau douce non adoucie avec de l'eau adoucie issue de l'adoucisseur, du liquide de lavage ayant un certain degré de dureté est admis dans la cuve de lavage pour laver la vaisselle, **caractérisé en ce que** les programmes de lavage peuvent être préréglés sur différents degrés de dureté pour laver la vaisselle.

2. Procédé selon la revendication 1, **caractérisé en ce que** les étapes associées à un programme de lavage pouvant être sélectionné peuvent être préréglées sur différents degrés de dureté.

3. Procédé selon la revendication 1 ou 2, **caractérisé en ce que** différentes valeurs de dureté pour les liquides de lavage sont enregistrées dans une mémoire électronique du lave-vaisselle en étant accessibles (en relation avec des quantités d'eau de lavage prédéfinis), qui sont chaque fois constituées de rapports de mélange définis entre les duretés de l'eau douce non traitée et les duretés de l'eau issue de l'adoucisseur, et **en ce que** les vannes dans le circuit d'eau douce et/ou dans le circuit d'eau adoucie de l'appareil sont commandées en fonction du degré de dureté sélectionné pour le liquide de lavage.

4. Procédé selon l'une ou plusieurs des revendications 1 à 3, **caractérisé en ce que** la dureté de l'eau du liquide de lavage est corrigée/modifiée en fonction de la dureté de l'eau non traitée.

5. Procédé selon l'une ou plusieurs des revendications 1 à 4, **caractérisé en ce que** le degré de dureté du liquide de lavage admis dans la cuve de lavage de l'appareil au cours d'une étape de lavage où l'eau circule est relevé par le capteur et est comparé au degré de dureté préréglé de l'eau adoucie, et **en ce que** le coupage de l'eau est commandé en fonction du résultat de la comparaison.

6. Procédé selon l'une ou plusieurs des revendications 1 à 5, **caractérisé en ce que** le degré de dureté de l'eau de la quantité de liquide de lavage à faire entrer dans la cuve de lavage pour laver la vaisselle est réglé sur une valeur de préférence comprise entre 0,4° d et 4° d ou supérieure.

7. Procédé selon l'une ou plusieurs des revendications 1 à 6, **caractérisé en ce que** la dureté de l'eau du liquide de lavage au cours des étapes prélavage, lavage, rinçage intermédiaire et/ou rinçage final est commandée en fonction du degré de salissure, notamment de la turbidité du liquide de lavage en circulation.

8. Procédé selon l'une ou plusieurs des revendications 1 à 7, **caractérisé en ce qu'**une fonction spéciale peut être enclenchée séparément manuellement ou via le programme dans le cadre d'au moins l'un des programmes standard et/ou additionnels, laquelle influe sur le déroulement du programme au moins en ce qui concerne la dureté et/ou la température de l'eau de lavage.

9. Procédé selon la revendication 8, **caractérisé en ce que** la fonction spéciale aide le lavage de verres délicats.
